## Europäisches Patentamt
## European Patent Office
## Office européen des brevets

(19)

(11) Veröffentlichungsnummer: **0 112 398**
**B1**

(12)

# EUROPÄISCHE PATENTSCHRIFT

(45) Veröffentlichungstag der Patentschrift:
**03.09.86**

(51) Int. Cl.⁴: **B 01 J 4/00**, B 65 G 65/48,
G 01 F 13/00

(21) Anmeldenummer: **82111794.2**

(22) Anmeldetag: **20.12.82**

(54) **Dosiereinrichtung.**

(43) Veröffentlichungstag der Anmeldung:
**04.07.84 Patentblatt 84/27**

(45) Bekanntmachung des Hinweises auf die Patenterteilung:
**03.09.86 Patentblatt 86/36**

(84) Benannte Vertragsstaaten:
**AT BE CH DE FR GB IT LI NL**

(56) Entgegenhaltungen:
**DE-A-1 939 997**
**FR-A-2 250 100**
**GB-A-1 402 429**
**US-A-2 347 271**

(73) Patentinhaber: **BAYER AG, Konzernverwaltung RP Patentabteilung, D-5090 Leverkusen 1 Bayerwerk (DE)**

(72) Erfinder: **Jähn, Peter, Am Scherfenbrand 71, D-5090 Leverkusen 1 (DE)**
Erfinder: **Kriesner, Klaus, Goethestrasse 1, D-4018 Langenfeld (DE)**
Erfinder: **Marzolph, Gerhard, Dr., Roggendorfstrasse 65, D-5000 Koeln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Erfindung betrifft eine Dosiereinrichtung, insbesondere zur Feindosierung, für böschungsausbildende Schüttgüter, bestehend aus einem mit Aufgabe- und Austragsöffnung versehenem Gehäuse, in dem ein Rotor angeordnet ist, der eine Rille besitzt.

Bei verschiedenen chemischen Prozessen sind oft rieselfähige Stoffe kontinuierlich zuzusetzen. Besondere Schwierigkeiten bereiten dabei kleinste Mengen, wie sie beispielsweise bei Laborversuchen zugeführt werden müssen.

Bekannt ist ein Walzenzuteiler, bei dem das Fördergut in Rillen die parallel zur Achse angeordnet sind, aus dem Aufgabetrichter abgezogen wird, um dann nach Förderung entlang der Gehäusewandung unten frei herauszufallen.

Der Nachteil dieser Vorrichtung besteht darin, daß eine kontinuierliche Abgabe nicht möglich ist, da in dem Augenblick, in dem die Rille das umgebene Gehäuse verläßt, diese sofort vollständig leer läuft. Eine Vergleichmäßigung der Dosierung ist zwar durch die Erhöhung des Durchsatzes zu erreichen, der im allgemeinen dann wegen der Menge für Laborversuche nicht weiter geeignet ist. Auch ist eine Zwangssäuberung der Rillen technisch schwierig, so daß der Walzenzuteiler für anhaftende Produkte kaum einsetzbar ist. Weiter erzeugen die parallelen Kanten von Rillen und Öffnung einen unerwünschten Abrieb, ja es ist sogar durch eingeklemmtes Produkt mit einer Blockierung der Dosiereinrichtung zu rechnen.

Bekannt (GB-A-1 402 429) ist eine Zuführeinrichtung für feste Teilchen, die über einen Trichter einem Spalt zwischen zwei gegensinnig laufenden Walzen zugeführt werden, um dann durch diesen oder durch umlaufende Rillen entlang des Umfanges der Walzen nach unten abtransportiert zu werden.

Durch die Zwangsförderung tritt eine ungewollte Verdichtung auf, die eine genaue Dosierung erschwert und zu Verklumpungen führen kann.

Der Erfindung liegt die Aufgabe zugrunde, eine produktschonende Dosiervorrichtung zu finden, die eine kontinuierliche Zugabe von Schüttgütern bei hoher Dosiergenauigkeit - insbesondere bei Kleinstmengen - erlaubt.

Die Aufgabe wurde erfindungsgemäß dadurch gelöst, daß auf dem Dosierweg eine korrespondierende Tangente zwischen der der Rille unmittelbar gegenüberliegenden Kante des Gehäuses im Bereich von Ein- oder Austrittsöffnung des Schüttgutes und einer tiefsten Stelle des Querschnittes der Rille mit einem Winkel zur Horizontalen vorhanden ist, der kleiner ist als der dort bei dem jeweiligen Schüttgut sich ausbildende Winkel zwischen Böschung und Horizontalen.

Durch die erfindungsgemäße Rille, deren Querschnittsabmessungen mindestens ein Mehrfaches der maximalen Teilchenabmessung betragen, kann kontinuierlich ein rieselfähiges Schüttgut in vorgegebener Menge zugegeben werden, wobei der drehende Rotor sicherstellt, daß keine Verstopfungen und damit Unregelmäßigkeiten in der Zufuhr eintreten. Durch entsprechende Richtungsvorgaben der umlaufenden Rille zur lotrechten Ebene kann darüberhinaus die Förderung je nach Lage zusätzlich entsprechender Reibungskräfte beeinflußt werden. Die Vorrichtung besitzt einen einfachen, kompakten Aufbau, der die Instandhaltung und einen Fördergutwechsel erleichtert.

Wenn der spitze Winkel der Linie, die in der Ebene durch Umfang des Rillenfußes am Rotor und innerer Kante der Gehäuseöffnung liegt, kleiner ist als der Böschungs- bzw. Fließwinkel des zu dosierenden Schüttgutes innerhalb der Rille, kann diese zwar ausgefüllt werden, aber ein Durchschießen des Schüttgutes ist nicht mehr möglich. Die gewünschte Dosiermenge ist dann nur noch von dem Rillenvolumen und der Drehzahl des Rotors abhängig. Hierdurch wird der Dosierfehler, insbesondere bei Zugabe von kleinsten Mengen, sehr gering. Gleichzeitig wird das Schüttgut schonend behandelt.

In einer besonderen Ausführungsform weisen die produktbeaufschlagten Bauteile unterschiedliche Reibungskoeffizienten auf.

Durch beispielsweise rauhe Mitnahmeflächen in der Rille und glatte Gleitflächen im Gehäuse wird das Schüttgut ohne wesentliche Veränderung der Struktur zur Austragsstelle geleitet, wodurch die Dosiergenauigkeit erhöht und ein Abrieb am Gehäuse verringert wird.

In einer weiteren Ausführungsform hat der Rillenquerschnitt eine vorgegebene Form.

Durch die Form der Rille kann das geförderte Volumen bei gleichzeitiger Veränderung der Mitnahmefläche vorgegeben werden. Ein Dreieck ist z.B. für kleine Mengen, eine Rechteckrinne für größere Mengen geeignet. Bei ungleichmäßigem Korndurchmesser des Schüttgutes ist eine Rille mit halbkreisförmigem Querschnitt vorzuziehen.

In einer anderen Ausführungsform ist vor der Rille eine Zuteilvorrichtung angeordnet.

Mit einer Zuteilvorrichtung, die beispielsweise aus einem Auflockerer (Rührwerk) oder Verdichter (Walzenrad) bestehen kann, ist es möglich, eine Brückenbildung zu vermeiden und das Schüttgut mit einer gleichmäßigen Dichte in die Rille einzubringen, so daß die Dosiergenauigkeit noch weiter erhöht wird.

In einer Ausführungsform ist an der Austragsstelle ein Abstreifer angeordnet.

Durch den Abstreifer ist es möglich, auch bei anbackendem Schüttgut die Rille bei jedem Umlauf restlos zu säubern, so daß eine hohe Dosiergenauigkeit erreicht wird.

Ein Beispiel der Erfindung ist in den Zeichnungen dargestellt und wird im folgenden beschrieben. Es zeigen:

Fig. 1 Querschnitt durch Walze,
Fig. 2 Längsschnitt durch Walze.

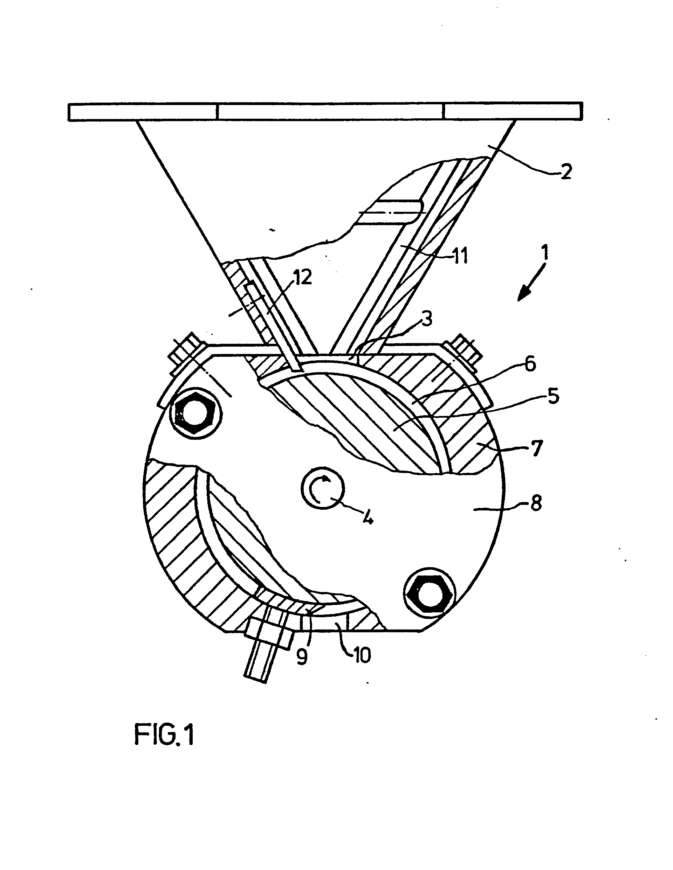

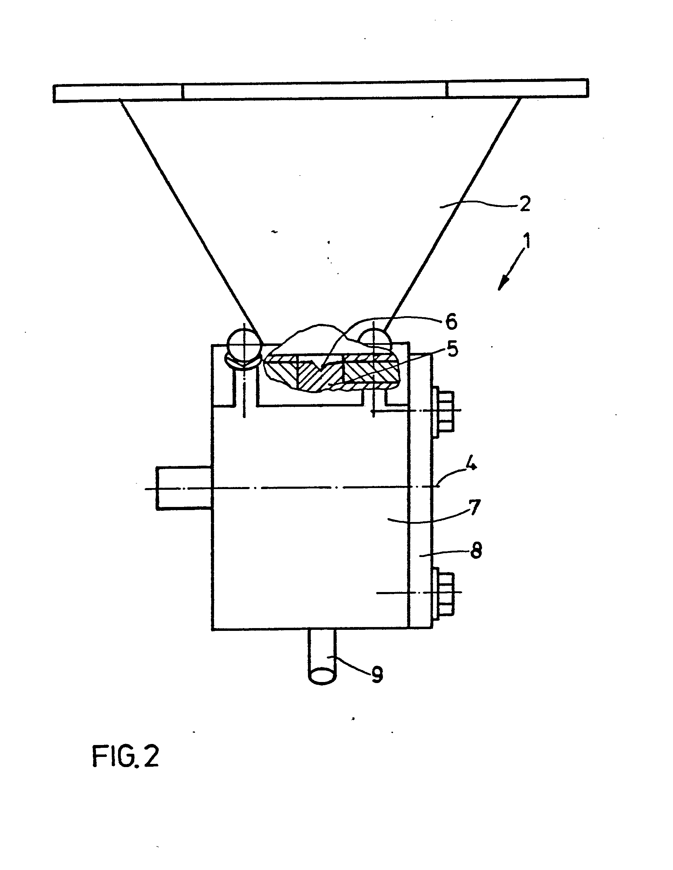

In Fig. 1 und 2 ist eine Dosiervorrichtung 1 dargestellt, bei der ein Aufgabetrichter 2 mit Aufgabeöffnung 3 über einem um die Achse 4 drehende Rotor 5 mit Rille 6 in einem Gehäuse 7 angeordnet ist. Weiter ist im Schnitt teilweise ein Deckel 8 und ein Abstreifer 9 in Austragsöffnung 10 gezeigt. Außerdem ist im Trichter 2 ein Rührer als Zuteilvorrichtung 11 und ein Schott 12 gezeigt. Der Rotor 5 und die Zuteilvorrichtung 11 werden durch nicht dargestellte Motore angetrieben.

In einen Aufgabetrichter 2 wird Schüttgut gefüllt, welches dann - evtl. unter Vergleichmäßigung der Zufuhr durch eine Zuteileinrichtung 11 - selbsttätig durch die Aufgabeöffnung 3 unter Ausbildung einer gleichbleibenden Böschung entlang einer umlaufenden Rille des Rotors 5 rieselt, wobei die geometrischen Abmessungen so ausgebildet sind, daß der Auslauf des Schüttgutes vor der Stelle in der Rille 6 endet, ab der das Schüttgut wegen zurückstehender Neigung infolge der Schwerkraft die Reibungskräfte überwinden würde. Beim weiteren Transport wird das Schüttgut dann kontinuierlich durch Drehen des Rotors 5 mitgenommen, wobei durch die Drehzahl und die Füllung der Rille 6 eine genau dosierte Menge gefördert wird, bis diese schließlich selbsttätig durch die Austragsöffnung 10 nach unten wegfällt. Durch einen Abstreifer 9 werden dann noch evtl. verbleibende Reste aus der Rille 6 entfernt.

Die Konstruktion der Dosiervorrichtung erfolgt zweckmäßigerweise mit solchen Materialien, die gegenüber dem zu fördernden Schüttgut die notwendige Härte und Korrosionsfestigkeit besitzen. Dabei kann es sinnvoll sein, den Rotor, bzw. dessen produktbeaufschlagte Teile aus einem anderen Material als das Gehäuse, bzw. dessen produktbeaufschlagte Teile, zu fertigen.

## Beispiele

Entsprechend Figur 1 und 2 wurden drei Dosiervorrichtungen mit folgenden Abmessungen hergestellt:

| Dosier-vorrich-tung | Gehäuse | Rotor | | | Rille | |
| | Material | Material | Durchmesser außen | Form | Breite | Tiefe |
| --- | --- | --- | --- | --- | --- | --- |
| Nr. 1 | 1.4571 | PTFE/GF | 40 mm | Dreieck | 2 mm | 1 mm |
| Nr. 2 | 1.4571 | PTFE/GF | 60 mm | Dreieck | 6 mm | 3 mm |
| Nr. 3 | 1.4571 | 1.4571 | 60 mm | Trapez | oben 20 mm unten 15 mm | 4,8 mm |

Mit diesen drei Dosiervorrichtungen wurden folgende Produkte dosiert:

| Beispiel | Dosiervor-richtung | Produkt | Schütt-dichte | Korndurch-messer | Drehzahl der Walze | Dosierte Menge | Volumen-Wirkungs-grad |
| | | | g/cm$^3$ | mm | 1/min | g/h | C |
| --- | --- | --- | --- | --- | --- | --- | --- |
| 1 | Nr. 1 | Natrium-sulfat Wasserfrei | 1,4 | <0,20 | 0,7 | 3 | 0,40 |
| 2 | Nr. 2 | Oxalsäure | 0,69 | <1 | 32 | 1670 | 0,78 |
| 3 | Nr. 3 | Natrium-hexameta-phosphat | 1,09 | <0,25 | 17 | 14580 | 0,90 |

## Patentansprüche

1. Dosiereinrichtung, insbesondere zur Feindosierung, für böschungsausbildende Schüttgüter, bestehend ~.is einem mit Aufgabe- und Austragsöffnung (3, .?) versehenen Gehäuse (7) in dem ein Rotor (5) angeordnet ist, der mindestens eine Rille (6) entlang des Umfanges des Rotors besitzt, dadurch gekennzeichnet, daß auf dem Dosierweg eine korrespondierende Tangente zwischen der der Rille unmittelbar gegenüberliegenden Kante des Gehäuses im Bereich von Ein- oder Austrittsöffnung des Schüttgutes und einer tiefsten Stelle des Querschnittes der Rille (6) mit einem Winkel zur Horizontalen vorhanden ist, der kleiner ist als der dort bei dem jeweiligen Schüttgut sich ausbildende Winkel zwischen Böschung und Horizontalen.

2. Dosiervorrichtung nach Anspruch 1, dadurch gekennzeichnet, daß die produktbeaufschlagten Bauteile unterschiedliche Reibungskoeffizienten aufweisen.

3. Dosiervorrichtung nach Anspruch 1 bis 2, dadurch gekennzeichnet, daß der Rillenquerschnitt (6) eine vorgegebene Form hat.

4. Dosiervorrichtung nach den Ansprüchen 1 bis 3, dadurch gekennzeichnet, daß vor der Rille eine Zuteilvorrichtung (11) angeordnet ist.

5. Dosiervorrichtung nach den Ansprüchen 1 bis 4, dadurch gekennzeichnet, daß an der Austragsstelle (10) ein Abstreifer (9) angeordnet ist.

## Claims

1. Metering apparatus, in particular for fine metering, for slope-forming loose materials, consisting of a housing (7) provided with a charge and discharge opening (3, 10), in which housing a rotor (5) is arranged which has at least one groove (6) along the circumference of the rotor, characterised in that along the metering path a corresponding tangent is present between the edge of the housing which is directly opposite the groove in the region of the inlet or outlet opening for the loose material and a lowest point of the cross-section of the groove (6), which tangent has an angle in relation to the horizontal which is smaller than the angle, which is formed in the said region, between the slope of the respective loose material and the horizontal.

2. Metering apparatus according to Claim 1, characterised in that the structural parts charged with the product have different coefficients of friction.

3. Metering apparatus according to Claim 1 to 2, characterised in that the cross-section of the groove (6) has a predetermined shape.

4. Metering apparatus according to Claims 1 to 3, characterised in that a supply device (11) is arranged upstream of the groove.

5. Metering apparatus according to Claims 1 to 4, characterised in that a scraper (9) is arranged at the discharge point (10).

## Revendications

1. Appareil de dosage, destiné en particulier au dosage fin de produits en vrac se déposant en suivant une allure en talus, qui comporte un boîtier (7) présentant une ouverture d'alimentation (3) et une ouverture de sortie (10), dans lequel est monté un rotor (5), creusé à la périphérie d'au moins une rainure (6), caractérisé en ce que, sur le trajet de dosage, il se présente une tangente correspondante entre le côté du boîtier directement opposé à la rainure, dans la zone de l'ouverture d'entrée ou de l'ouverture de sortie du produit en vrac, et un point inférieur extrême de la section transversale de la rainure (6), cette tangente se présentant sous un angle, par rapport à l'horizontale, qui est plus faible que l'angle se formant en cet endroit dans le cas du produit en vrac particulier, entre les pentes en talus et l'horizontale.

2. Appareil de dosage suivant la revendication 1, caractérisé en ce que les éléments ou parties de la construction qui sont destinés à être chargés par le produit présentent des coefficients de frottement différents.

3. Appareil de dosage suivant les revendications 1 et 2, caractérisé en ce que la section transversale de la rainure (6) a une forme donnée.

4. Appareil de dosage suivant les revendications 1 à 3, caractérisé en ce qu'en amont de la rainure, il comporte un organe de répartition (11).

5. Appareil de dosage suivant les revendications 1 à 4, caractérisé en ce qu'il comporte un organe de raclage (9) qui est prévu à l'endroit de sortie (10).

FIG.1

FIG. 2